(19) Europäisches Patentamt
European Patent Office
Office européen des brevets

(11) EP 1 458 769 B1

# (12) EUROPEAN PATENT SPECIFICATION

(45) Date of publication and mention of the grant of the patent:
**31.12.2008 Bulletin 2009/01**

(21) Application number: **02796644.9**

(22) Date of filing: **16.12.2002**

(51) Int Cl.:
***C08F 8/00*** *(2006.01)* ***B41M 5/00*** *(2006.01)*
***C09D 11/00*** *(2006.01)*

(86) International application number:
**PCT/EP2002/014319**

(87) International publication number:
**WO 2003/054029 (03.07.2003 Gazette 2003/27)**

## (54) POLY(VINYL ALCOHOL)-CO-POLY(N-VINYL FORMAMIDE) COPOLYMERS

POLYVINYLALKOHOL-POLY(N-VINYLFORMAMID) KOPOLYMERE

COPOLYMERES DE POLY(VINYL ALCOOL)-CO-POLY(N-VINYL FORMAMIDE)

(84) Designated Contracting States:
**AT BE BG CH CY CZ DE DK EE ES FI FR GB GR IE IT LI LU MC NL PT SE SI SK TR**

(30) Priority: **21.12.2001 US 342324 P**
**22.10.2002 US 420441 P**

(43) Date of publication of application:
**22.09.2004 Bulletin 2004/39**

(73) Proprietor: **Ciba Holding Inc.**
**4057 Basel (CH)**

(72) Inventors:
- **RENZ, Walter, L.**
  **Brookfield, CT 06804 (US)**
- **RAVICHANDRAN, Ramanathan**
  **Suffern, NY 10901 (US)**
- **NAISBY, Andrew, J.**
  **Yorktown Heights, NY 10598 (US)**
- **SUHADOLNIK, Joseph**
  **Yorktown Heights, NY 10598 (US)**
- **WOOD, Mervin, Gale**
  **Mobile, AL 36609 (US)**
- **XIONG, Rong**
  **Dobbs Ferry, NY 10522 (US)**

(56) References cited:
**EP-A- 0 339 371**
**EP-A- 0 580 078**
**EP-A- 0 580 079**
**WO-A-00/37259**
**US-A- 3 702 800**

- **PATENT ABSTRACTS OF JAPAN vol. 199, no. 805, 30 April 1998 (1998-04-30) & JP 10 016381 A (DAI ICHI KOGYO SEIYAKU CO., LTD.), 20 January 1998 (1998-01-20)**
- **PATENT ABSTRACTS OF JAPAN vol. 199, no. 805, 30 April 1998 (1998-04-30) & JP 10 016380 A (DAI ICHI KOGYO SEIYAKU CO., LTD.), 20 January 1998 (1998-01-20)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 458 769 B1

## Description

This invention relates to ink jet recording media, in particular to ink jet media coating layers that comprise certain poly(vinyl alcohol)-co-poly(N-vinyl formamide) copolymers.

Ink jet printing technology is used for example for presentation (transparency), graphic arts, engineering drawing and home office applications. The performance requirements for ink jet recording media used for these applications include efficient ink absorption, fast drying, good colorfastness, high image resolution, dimensional stability and archival stability of the printed image against the effects of light, atmospheric pollutants and humidity.

The individual layers that receive ink jet ink images are referred to as ink jet media or ink jet receivers. Ink jet media may simply consist or cellulosic fiber paper or of cellulosic fibers and a filler in order that inks may be absorbed in the space between fibers.

Ink jet recording papers may also be of the coated type, which consists for example of a paper (or support), an ink-receptive layer or ink-absorbing layer or layers, and optionally a protective coating layer. The ink-receptive layer is the ink-receiving or image drying layer. Thin protective coating layers are typically employed to provide physical protection for the underlying layer or to protect the image. Protective layers may reduce tackiness, provide a glossy appearance, and like other layers, offer an ink-receptive surface that may serve as a carrier for specific components of the ink.

A barrier layer between a paper support and the ink receptive layer or layers is also typically employed.

Attempts have been made to employ certain polymers or blends of polymers as components of ink jet recording media. In general, blends are used to find the proper balance of ink absorption, dry time and image permanence.

Polymers based on vinyl alcohol are commonly used in ink jet recording media because of their hydrophilic nature, contribution to high print densities, good pigment binding properties, favorable rheological properties and synergy with additives such as optical brighteners. The use of fully and partially saponified poly(vinyl alcohol)s in paper coatings for ink jet printing media are described in Using Polyvinyl Alcohol In Ink-Jet Printing Paper (TAPPI Journal, January 1997, pp. 68-70).

Polymers based on vinyl alcohol are employed in each of the two major classes of ink receptive layers: the so-called dense polymer systems containing polymer with no or very low levels of pigmention (generally <5 wt.%), and the so-called microporous and nanoporous receptive layers in which polymers are blended with relatively high levels (ca. 25-90 wt.%) of inorganic pigments such as kaolin, silicas, calcium carbonate, alumina, boehmites, etc. Dense polymer receiver coatings generally provide good image permanence in terms of lightfastness and resistance to image fading caused by atmospheric gases (e.g. ozone, NOx, SOx), but suffer from relatively slow ink dry speed and poor water/humidity resistance of the printed image. Nanoporous and microporous media provide significantly faster ink drying speed and moisture resistance, but produce images that are more vulnerable to the effects of light and atmospheric gases when printed with dye-based ink jet inks.

Polymers of poly(vinyl alcohol) containing cationic, anionic, non-ionic and various reactive modifications for use in recording media are described in US Pat. 4,617,239, US Pat. 5,662,997, US Pat. 5,710,211 and several references below, which also give representative examples of ink jet recieving layer compositions.

U.S. Pat. No. 4,503,111 teaches a recording media which is a coating that comprises a polyvinylpyrrolidone and a matrix-forming hydrophilic polymer selected from gelatin and polyvinyl alcohol.

U.S. Pat. No. 4,575,465 discloses ink jet transparencies that comprise a transparent support carrying a layer comprising a vinylpyridine/vinylbenzyl quaternary salt copolymer and a hydrophilic polymer selected from gelatin, polyvinyl alcohol and hydroxypropyl cellulose.

U.S. Pat. No. 4,935,307 discloses an ink receptive layer that comprises (a) at least one water absorbing, hydrophilic polymeric material, (b) at least one hydrophobic polymeric material incorporating acid functional groups and (c) at least one polyethylene glycol.

U.S. Pat. No. 5,206,071 teaches an ink jet film composite comprising a support, a water-insoluble, water-absorptive and inkreceptive matrix layer, which matrix layer comprises a hydrogel complex and a polymeric high molecular weight quaternary ammonium salt.

U.S. Pat. No. 6,127,037 teaches an ink jet recording media layer that comprises polyalkyl or polyphenyl oxazoline polymers in addition to a hydrophilic, water-insoluble polymer or copolymer.

WO 0037259 teaches ink jet media comprising a support, an ink-receptive layer and a top layer that comprises a polymer that contains both a hydrophilic component and a hydrophobic component, or a mixture of two or more such polymers.

U.S. Pat. Nos. 4,880,497 and 4,978,427 teach a process for making paper that employs polymers made by copolymerizing from 10-90 mole% N-vinylformamide with a second unsaturated monomer, including vinyl acetate, and in a second step, hydrolyzing the resulting suspension copolymer with acid or base to the extent that between 30 and 100 mole% of the formyl groups are converted to amino groups. The resulting cationic solution polymers may contain significant amounts of vinyl alcohol functionality in addition to vinylamine units. As taught in example preparations, these

aqueous solution polymers also contain significant quantities of soluble acids or acid salts (e.g. formate and acetate) as coproducts of the hydrolysis step. The unpurified reaction mass (aqueous copolymer and hydrolysis coproducts) are recommended for use as wet and dry strength agents for addition to paper stock suspensions.

U.S. Pat. Nos. 5,194,492 and 5,300,566 teach an improved method and process for producing poly(vinyl alcohol-co-vinylamine) via a two-phase process in which an predominantly random linear copolymer of vinyl acetate and N-vinylformamide is prepared in methanol solution and then saponified with a catalytic amount of base to yield a solid salt-free intermediate of poly(vinyl alcohol-co-N-vinylformamide) which is subsequently hydrolyzed in a slurry reaction with base to give the desired poly(vinyl alcohol-co-vinylamine) free base copolymer as a solid, salt-free material.

EP 0869010 describes ink jet receiving layers containing a copolymer of vinyl alcohol and a primary or secondary vinylamine moiety. Such materials are prepared by copolymerization of vinyl acetate and N-vinyl-t-butylcarbamate, or vinyl acetate and an N-vinylamide, followed by hydrolysis to yield the preferred poly(vinyl alcohol-co-vinylamine). Ink receptive coatings containg these cationic copolymers are reported to have excellent printing and lightfastness properties with ink jet printers.

U.S. Pat. No. 6,060,566 describes graft copolymers produced by polymerization of N-vinylformamide in the presence of poly(vinyl alcohol) or a poly(vinyl alcohol-co-vinyl ester) copolymer, with subsequent elimination of 1-100% of the formyl groups on the grafted poly(N-vinylformamide) chains. The resulting solution polymers, which also may contain soluble coproducts of the hydrolysis step (i.e. formic acid or its salts, with or without acetic acid and its salts) are recommended for use in the production of uncoated paper and paperboard as dry and wet strength resins, retention aids, size promoters, dispersants, and creping assistants.

U.S. Pat. No. 5,798,173 describes ink jet recording sheets containing copolymers obtained by the polymerization of N-vinylformamide with acrylonitrile, followed by hydrolysis of the vinylformamide residues to yield a vinylamine copolymer having at least 20 mole% vinylamine content.

JP01024784 and JP07084091 decribe ink jet recording sheets having a coating containing a poly(N-vinylformamide) or its partial hydrolyzate [i.e. poly(N-vinylformamide-co-vinylamine)].

JP09302595 discloses papermaking agents, particularly sizes and coatings for ink jet recording papers, comprising graft copolymers of vinyl alcohol and N-vinylformamide which are hydrolyzed with acid (e.g. ammonium chloride and HCl) and then precipated by addition into acetone to yield a solid vinylamine copolymer acid salt.

JP11129609 describes a material for ink jet printing comprising a support and an ink receiving layer containing a copolymer comprising N-vinylformamide and at least one monomer drawn from a group including N-vinylamides, selected acrylamides, and vinyl acetate.

U.S. Pat. No. 6,096,826 teaches the use of piperidone modified poly(vinyl alcohol) in ink jet paper coating applications.

U.S. Pat. Nos. 5,463,110 and 5,672,731 describe compositions and methods for preparation of unsaturated 3-N-vinylformamido propionate esters and 3-N-vinylformamido-2-methyl propionate esters obtained by the Michael Addition of N-vinylformamide with (meth)-acrylic acid esters. These novel N-vinyl monomers may be polymerized via free radical addition polymerizations to yield functionalized poly(N-vinylformamide) homopolymers and copolymers.

JP 2002220558 discloses recording liquid which contains a water soluble resin which includes nonionic structural units and ionic structural units.

There is still a need to balance the requirements of ink jet media, specifically, to achieve ink jet media that provide excellent image quality and printing characteristics while providing improved image permanance against the harmful effects of light and/or atmospheric pollutants.

This objective has been achieved with the use of certain vinyl alcohol copolymers in one or more layers of ink jet media.

The present invention relates to an ink jet recording media system that comprises a support and one or more coating layers thereon, wherein at least one coating layer comprises a polyvinyl alcohol copolymer with N-vinylformamide, and/or a derivative of N-vinylformamide.

Specifically, the present invention is aimed at an ink jet recording media system that comprises a support and one or more coating layers thereon, wherein at least one coating layer comprises a copolymer of the formula

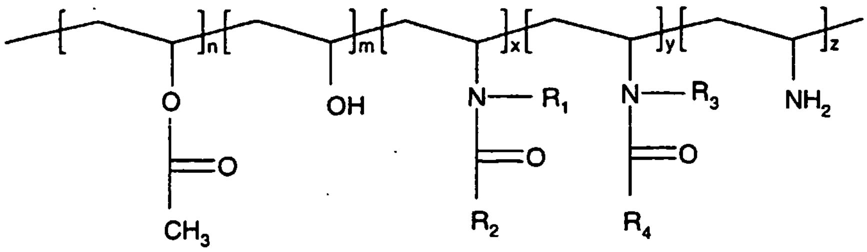

wherein

| | |
|---|---|
| n | is between 0 and about 20 mole percent, |
| m | is between about 50 and about 97 mole percent, |
| x | is between 0 and about 20 mole percent, |
| y | s between 0 and about 20 mole percent, |
| z | is between 0 and about 2 mole percent and |
| x+y | is between about 3 and about 20 mole percent, |
| $R_1$ and $R_3$ | are independently H; 3-propionic acid or $C_1$-$C_6$ alkyl ester thereof; or is 2-methyl- 3-propionic acid or $C_1$-$C_6$ alkyl ester thereof, and |
| $R_2$ and $R_4$ | are independently H or $C_1$-$C_6$ alkyl. |

For example, n is between 0 and about 15 mole percent.

Alkyl is straight or branched chain and is for example methyl, ethyl, n-propyl, isopropyl, n-butyl, sec-butyl, tert-butyl, amyl, iso-amyl, tert-amyl and n-hexyl.

The present copolymers may be referred to as PVOH/NVF copolymers.

The present PVOH/NVF copolymers are prepared for example from the partial hydrolysis of poly(vinyl acetate)-co-poly(N-vinyl formamide) as described in U.S. Pat. Nos. 5,300,566 and 5,194,492, the relevant parts of which are hereby incorporated by reference. The present PVOH/NVF copolymers are for example as described in U.S. Pat. No. 5,300,566 in formula III on column 4 therein.

The present PVOH/NVF copolymers have for example a weight average molecular weight $M_w$ of between about 10,000 and about 300,000. For instance, a weight average molecular weight of between about 10,000 and about 200,000.

For example, the present PVOH/NVF copolymers are salt-free poly(vinyl alcohol)-co-(N-vinyl formamide) and derivatives of these copolymers formed by Michael addition reaction of these copolymers with acrylic acid esters, wherein the weight average molecular weight Mw is between about 30,000 and about 130,000,
n is between 0 and about 15 mole percent,
m is between about 65 and about 90 mole percent,
x is between 0 and about 20 mole percent,
y is between 0 and about 20 mole percent,
z is between 0 and about 2 mole% percent and
x+y is between about 3 and about 20 mole percent.

For instance,
n is between 0 and about 5 mole percent and
m is between about 75 and about 90 mole percent.

For example,
n is between 0 and about 20 mole percent,
m is between about 65 and about 97 mole percent,
x is between about 3 and about 20 mole percent,
y is 0,
z is between 0 and about 2 mole percent and
x+z is between about 3 and about 20 mole percent.

For example,
n is between 0 and about 5 mole percent,
m is between about 75 and about 97 mole percent,
x is between 3 and about 20 mole percent,
y is 0,
z is between about 0 and about 2 mole percent,

x+z is between about 3 and about 20 mole percent and
$R_1$ and $R_2$ are H.

The present PVOH/NVF copolymers are particularly suitable for ink jet receiving layers due to their excellent print characteristics and superior resistance to image degradation of prints made with dye-containing ink jet inks as a result of the effects of light and atmospheric pollutants.

The copolymers of this invention are random or block copolymers.

For the purposes of this invention, the terms "ink jet media", "ink jet recording media" or "ink jet media system" or "ink jet recording media system" refers to the entire composition which receives the ink jet ink, or likewise also refers to any individual layers or combinations of individual layers of the entire composition.

The term "ink receptive layer" means the ink-receiving or image-forming layer. The ink receptive layer can be considered as a sponge layer intended for the absorption of the ink.

The term "protective coating layer" means a top coating layer of the ink jet media system, or overcoat layer, that may be employed to provide specific properties as outlined above. Protective coating layers are typically thin in comparison to the ink-receptive layer. The protective coating layer is the outermost layer, and must allow for ink penetration or may be applied in a subsequent lamination step.

The term "support" refers to the base substrate of the ink jet media, for example paper itself. The present supports are naturally occurring materials or are synthetic.

Supports are for example paper or a rigid or flexible plastic sheet of film. Plastic supports may include transparent plasitcs, translucent plastics, matte plastics, opaque plastics, resin-coated papers, nonwoven synthetic fiber textiles, and the like.

Supports may be for example cellulose esters, cellulose acetate, polyesters, polystyrene, polyethylene, poly (vinyl acetate), polypropylene, polycarbonate, polymethacrylic acid and methyl and ethyl esters, polyamides such as nylons, polyesters such as poly-(ethylene terephthalate) (PET), polyimides, polyethers, polyvinyl chloride, polytetrafluoroethylene, polyvinylidene fluoride and polysulfonamides.

Barrier layers are advantageously employed between a paper support and the ink receptive layer. The barrier layer is for example polyolefin, for instance polyethylene. The barrier layer may also be a metal foil, such as aluminum foil.

Coating layers comprising the copolymers of this invention are cured with any conventional technique. For example, the present coating layers are cured air dried under ambient conditions, are oven-cured, or are photo-cured.

Examples of polymers typically employed in ink jet media coating layers, , either alone or in combination with other resins, fillers and additives include water soluble and water insoluble resins such as gelatin, starch, styrene butadiene rubber latex, homopolymers and copolymers of (meth)acrylic acid esters, polyacrylic acid, nitrile butadiene rubber latex, polyethylene glycol, polyacrylamide, polyvinyl alcohol, polyurethane latexes and dispersions, vinyl alcohol/vinyl acetate copolymer, polyalkyl oxazoline, polyphenyl oxazoline, poly-ethyleneimines, methyl cellulose, hydroxymethyl cellulose, hydroxyethyl cellulose, hydroxypropy methyl cellulose, hydroroxypropyl ethyl cellulose, hydroxyethyl methyl cellulose, carboxymethyl cellulose and various poly(N-vinyl heterocycles) such as poly(N-vinyl pyrrolidone).

The copolymers of this invention are advantageously employed with cationic species such as oligomeric and polymeric amine salts, for example, those disclosed in U.S. Pat. No. 5,474,843 and elsewhere. Representative cationic polymers include those containing one or more monomers selected from quaternary or acid salts of dialkylaminoalkyl acrylates and methacrylates, the quaternary or acid salts of dialkylaminoalkylacrylamides and methacrylamides, N,N-diallyldialkyl ammonium halides, Mannich products, and the like. Representative are N,N-dimethylaminoethylacrylate methyl chloride quaternary salt (DMAEA-MeCl-q), diallyldimethylammonium chloride (DADMAC), and the like.

Other suitable components may be present in the ink jet media systems and coatings of the present invention.

The coating may advantageously employ crosslinking agents in order to limit or adjust the solubility of the applied coating. These may be selected to insolubilize either the subject copolymers, other component(s) of the coating, or a combination of these. Suitable crosslinking agents for the subject copolymers include materials known in the art to crosslink polyvinyl alcohols, e.g. glyoxal, ammonium zirconium carbonates, melamine ethers, etc.

Additional components include for example pigments and fillers, for example amorphous and crystalline silica, aluminum trihydrate, kaolin, talcum, chalk, betonite, zeolites, glass beads, calcium carbonate, potassium sodium aluminum silicate, diatomaceous earth, silicates of aluminum and magnesium and mixtures thereof. Titanium doxide may also be used for certain applications. Organic particulates which may be employed include polyolefins, polystyrene, polyurethane, starch, poly(methyl methacrylate) and polytetrafluoroethylene. Pigments, fillers and organic particulates may be employed in coating layers of the present invention from about 0.1 to about 90% by weight, based on the weight of the dry coating. Polyolefins are for example polypropylene or polyethylene.

The present copolymers may advantageously be employed as a binder or part of a binder for a microporous or a nanoporous ink jet media system.

Paper substrates are for example advantageously coated with clay or a plastic resin such as polyethylene or polyvinyl chloride prior to coating with the ink jet receptive layer.

Additional additives also include surface active agents which control wetting or spreading action of the coating

mixture, antistatic agents, thickeners, suspending agents, particulates which control the frictional properties or alter the reflective properties or act as spacers, pH controlling compounds, light stabilizers, antioxidants, humectants, bacteriostats, crosslinking agents, optical brighteners, etc.

Specific examples are starch, xanthan gum, quaternary ammonium-salts, chitin, cellulose derivatives, and water soluble metal salts, for instance salts of Ca, Ba, Mg or salts of the rare earth metal series.

Stabilizer systems have been developed for the ink colorants. These stabilizers are also employed in the ink jet media systems of the present invention. They are disclosed for example in U.S. Pat. Nos. 5,782,963 and 5,855,655, the relevant disclosures of which are hereby incorporated by reference.

Additional additives that are advantageously employed as components of coating layers of an ink jet media system include those of the known classes of polymer stabilizers. For example, polymer stabilizers selected from the group consisting of ultraviolet light absorbers, hindered amine light stabilizers (HALS), and antioxidants.

For example, suitable additional additives are selected from:

Antioxidants selected from the group consisting of alkylated monophenols, alkylthio-methylphenols, hydroquinones and alkylated hydroquinones, tocopherols, hydroxylated thiodiphenyl ethers, alkylidenebisphenols, hindered phenols derived from benzyl compounds, hydroxybenzylated malonates, aromatic hydroxybenzyl compounds, triazine-based hindered phenols, benzylphosphonates, acylaminophenols, esters of β-(3,5-di-tert-butyl-4-hydroxyphenyl)propionic acid with mono- or polyhydric alcohols, esters of β-(5-tert-butyl-4-hydroxy-3-methylphenyl)propionic acid with mono- or polyhydric alcohols, esters of β-(3,5-dicyclohexyl-4-hydroxyphenyl)propionic acid with mono- or polyhydric alcohols, esters of 3,5-di-tert-butyl-4-hydroxyphenyl acetic acid with mono- or polyhydric alcohols, amides of β-(3,5-di-tert-butyl-4-hydroxyphenyl)propionic acid, ascorbic acid and aminic antioxidants, for example N,N'-diisopropyl-p-phenylenediamine; and

UV absorbers and light stabilizers selected from the group consisting of 2-(2-hydroxyphenyl)-2H-benzotriazoles, for example known commercial hydroxyphenyl-2H-benzotriazoles, 2-hydroxybenzophenones, esters of substituted and unsubstituted benzoic acids, for example 4-tertbutyl-phenyl salicylate,acrylates and malonates, oxamides, tris-aryl-o-hydroxyphenyl-s-triazines and sterically hindered amine stabilizers, for example N-H, N-acyl, N-oxyl, N-hydroxyl, N-alkyl, N-alkoxy and N-hydroxyalkoxy hindered amines.

For example, the nitroxyl, hydroxylamine and hydroxylamine salt stabilizers as disclosed in U.S. Pat. No. 6,254,724 are advantageously used in the recording media of the present invention. The relevant parts of U.S. Pat. No. 6,254,724 are hereby incorporated by reference.

For instance, UV absorbers are advantageously employed in protective coating layers of the present invention, whether the protective coating layer is part of the prepared recording media system or whether it is applied in a subsequent lamination step.

Another object of the present invention is a method for preparing an ink jet media system, which method comprises applying one or more coating layers on a support, wherein at least one of the coating layers comprises a copolymer as described above.

Any known method may be employed in the application of the individual coating layers of the present ink jet media systems. Known methods are for example Meyer bar coating, reverse roll coating, roller coating, wire-bar coating, dip-coating, air-knife coating, slide coating, curtain coating, doctor coating, flexographic coating, wound wire coating, slot coating, slide hopper coating and gravure coating.

Inks for ink jet printing are well known. These inks comprise a liquid vehicle and a dye or pigment dissolved or suspended therein. The liquid vehicle employed comprises water or a mixture of water and a water miscible organic solvent. The inks may also be vehicles for additives or other components that are to be incorporated into the recording media system.

Protective coating layers are typically about 1 micron thick. Supports are typically from about 12 microns to about 500 microns thick. Ink receptive layers are typically about 0.5 to about 30 microns thick.

The following Examples are for illustrative purposes only and are not to be construed as limiting the present invention in any manner whatsoever.

**Preparation Examples**

**Example P1**

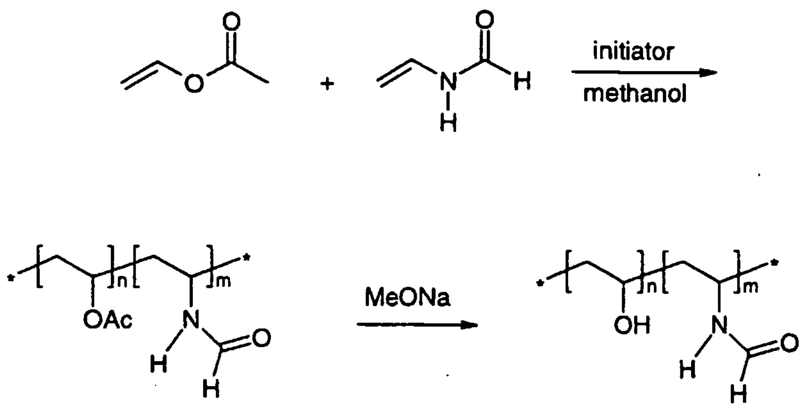


Vinyl acetate (525 g, 6.1 moles), N-vinylformamide (45 g, 0.63 mole), and methanol (332 g, 10.4 moles) are added to a three-liter laboratory flask equipped with the necessary auxiliary equipment. The contents are heated to 60°C at which time tert-butylperoxyneo-decanoate (5.5 g, 0.023 mole), dissolved in 30 mL of methanol, is added drop wise over 15 minutes. A solution of N-vinylformamide (80 g, 1.13 mole) and vinyl acetate (720 g, 8.36 moles) is added to the lab reactor over four hours. The polymerization is continued for 15 minutes after the solution addition is completed. A solution of sodium nitrite (0.5 g, 0.007 mole) in methanol (39.6 g, 1.24 mole) is added to the reaction flask. The reaction mass is cooled to ambient temperature and sodium methoxide (8 g of sodium dissolved in 40 mL of methanol) is added drop wise over one hour. A white solid is formed which is filtered and washed with 1.5 liters of methanol. After drying, the title random copolymer is received as a white solid weighing 580 grams having a molecular weight of 146,000 as determined by gel permeation chromatography (GPC).

**Example P2** Comparative Example

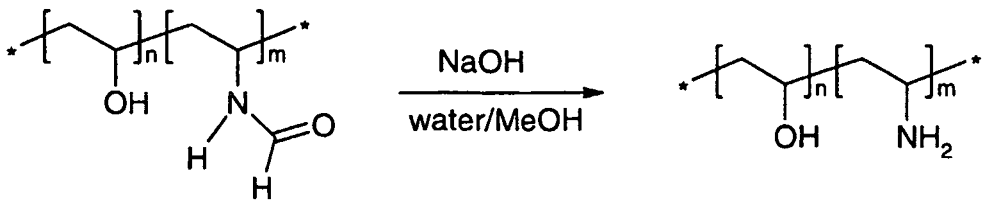


The random copolymer of Example P1 (300 g) and methanol (1500 g, 46.9 moles) are added to a laboratory flask equipped with the necessary auxiliary equipment. To this stirred suspension is added 50 % aqueous sodium hydroxide at a 1:1 molar ratio. The suspension is heated to 60°C and held there for six hours. The solids are filtered and washed with 1.5 L of methanol. The solids are dried in a vacuum oven until constant weight is achieved. The title random copolymer is received as a white solid weighing 280 g having a molecular weight of 107,000 as determined by gel permeation chromatography (GPC).

**Example P3**

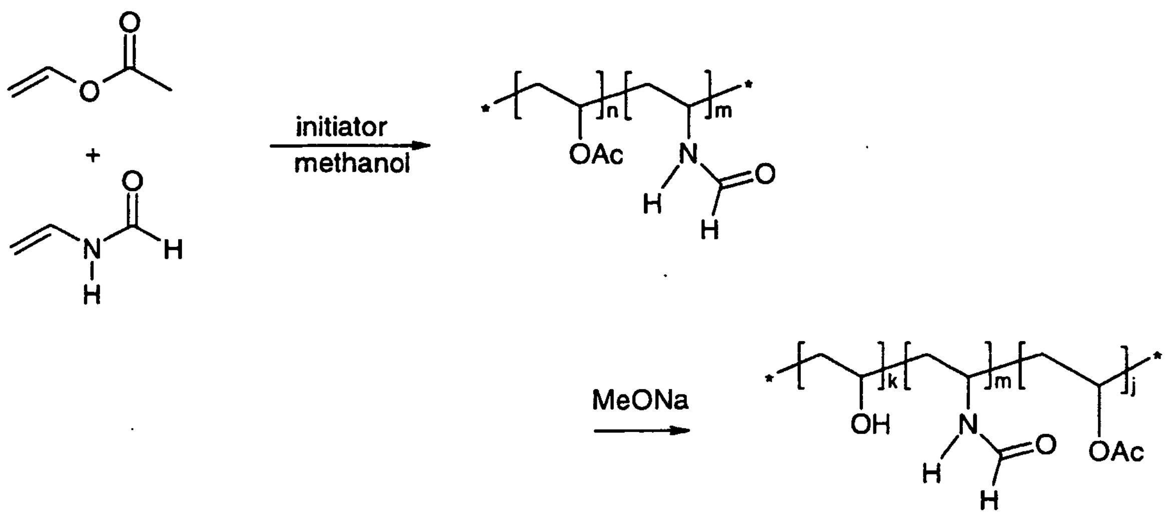


Vinyl acetate (1000 g, 11.6 moles), N-vinylformamide (20 g, 0.28 mole), and methanol (395 g, 12.4 moles) are added to a three-liter laboratory flask equipped with the necessary auxiliary equipment. The contents are heated to 60°C at which time tert-butylperoxyneo-decanoate (0.6 g, 0.0025 mole), dissolved in 25 mL of methanol, is added drop wise over 15 minutes. A solution of N-vinylformamide (30 g, 0.42 mole) and vinyl acetate (600 g, 6.98 moles) is added to the lab reactor over four hours. The polymerization is continued for 15 minutes after the solution addition is completed. A solution of sodium nitrite (0.5 g, 0.007 mole) in methanol (39.6 g, 1.24 mole) is added to the reaction flask. The reaction mass is cooled to ambient temperature and sodium methoxide (8 g of sodium dissolved in 40 mL of methanol) is added drop wise over one hour. A white solid is formed which is filtered and washed with 1.5 liters of methanol. After drying, the title random copolymer is received as a white solid weighing 690 grams having a molecular weight of 204,000 as determined by gel permeation chromatography (GPC). An $^1$HNMR analysis of the polymer sample shows: -OH group (80 mole%), -C(=O)$CH_3$ (14 mole%), and -N(H)C(=O)H (6 mole%).

**Example P4**

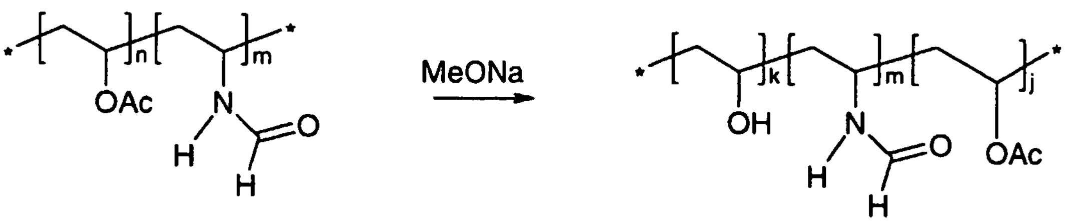


Following the hydrolytic procedure of Example P3, the copolymer of Example P3 (212 g) is further hydrolyzed to yield the title copolymer (200 g) as a white solid having a molecular weight of 195,000 as determined by gel permeation chromatography (GPC). An $^1$HNMR analysis of the polymer sample shows: -OH group (93 mole%), -C(=O)$CH_3$ (1 mole%), and-N(H)C(=O)H (6 mole%).

**Example P5** Polyvinylpyrrolidone (PVP)

Water (173 g) is added to a 5-liter laboratory reaction flask equipped with the necessary auxiliary equipment. The flask is degassed with nitrogen and heated to 80°C. 2,2'-Azobis(amidinopropane)dihydrochloride (0.75 g) is added to the reaction flask followed by the simultaneous addition of vinyl pyrrolidone (150 g) and water (150 g) over 3 and 3.5 hours, respectively. Once the addition is complete, the reactor contents are held at 80°C for an additional hour before cooling and filtering. The title copolymer is received as a 30 % aqueous solution with a viscosity of 250 cPs (Brookfield RVT, 20 rpm, spindle 3) and having a level of free monomer of less than 50 ppm.

**Application Examples**

**Example A1**

The commercial polymers and binders used are: gelatin (Imagel 8396, Kind and Knox), and polyvinylalcohol (PVOH, KH20, Nippon Goshei). The homopolymer polyvinylpyrrolidone (PVP) is synthesized according Example P5.

Dense Polymer Coating Formulations

General Procedure: Distilled water (90 g) is weighed into a glass jar and agitated with a lab mixer. Solid polymer powder (10 g) is added slowly. The resulting slurry is then heated, whilst stirring, to 80°C. The temperature and mixing is maintained for 45 minutes after which time the heat is removed and the clear solution is allowed to cool.

Gelatin Procedure: Distilled water (90 g) is weighed into a glass jar and agitated with a lab mixer. Gelatin (10 g) is added slowly. The resulting slurry is then heated, whilst stirring, to 60°C. The temperature and mixing is maintained for 20 minutes after which time the heat is removed and the clear solution is allowed to cool.

Aqueous solutions, polymer or gelatin, are drawn down onto a polyethylene coated paper using a Meyer bar so that a 20-micron coating thickness is obtained after oven drying.

Printing and Xenon Weathering Conditions

Yellow, magenta, and cyan color blocks are printed onto the instant samples using a HP 970 Cxi desk jet printer. Initial reflectance optical density and CIELAB color space measurements (L*, a*, b*) on the color blocks are measured using an X-Rite TR938 Spectrophotometer. The resultant prints are exposed in an Atlas Ci65 Weatherometer, installed with a Xenon arc lamp and inner and outer borosilicate filters, for different time intervals. The exposure conditions are power = 0.35 W/m$^2$ at 340 nm, relative humidity = 50%, and temperature = 50°C. After each exposure period, final reflectance optical density and CIELAB color space measurements are taken with the X_rite Spectrophotometer. The percent loss in optical density (%Delta OD) is reported along with the Delta E value. Delta OD and Delta E are calculated as follows:

$$((\text{initial-final/initial})\ \text{x}100) = \%\ \text{Delta OD}$$

$$[(\text{Delta L})^2 + (\text{Delta a})^2 + (\text{Delta b})^2]^{1/2} = \text{Delta E}$$

A variety of different coating polymers are evaluated following the present coating and weathering conditions. The Delta E (DE) values represent the change in color after the indicated time of exposure. A low DE value indicates less change in color and is highly desirable.

Color Fade of a Printed Article (50% Print Density. Yellow)

| Coating Polymer | DE after 96 hours |
|---|---|
| PVP | 18.1 |
| Gelatin | 9.1 |
| Example P2 | 4.7 |
| Example P4 | 4.3 |
| Example P1 | 2.9 |

Color Fade of a Printed Article (100% Print Density, Yellow)

| Coating Polymer | DE after 96 hours |
| --- | --- |
| PVP | 18.0 |
| Gelatin | 13.7 |
| Example P4 | 4.8 |
| Example P2 | 4.2 |
| Example P1 | 1.2 |

Color Fade of a Printed Article (50% Print Density, Magenta)

| Coating Polymer | DE after 96 hours |
| --- | --- |
| PVP | 38.3 |
| PVOH | 17.5 |
| Gelatin | 14.9 |
| Example P2 | 13.1 |
| Example P4 | 10.0 |
| Example P1 | 8.9 |

Color Fade of a Printed Article (100% Print Density, Magenta)

| Coating Polymer | DE after 96 hours |
| --- | --- |
| PVP | 33.0 |
| Example P2 | 12.1 |
| PVOH | 11.8 |
| Gelatin | 11.7 |
| Example P4 | 7.5 |
| Example P1 | 6.3 |

Color Fade of a Printed Article (50% Print Density, Cyan)

| Coating Polymer | DE after 96 hours |
| --- | --- |
| PVP | 17.3 |
| Gelatin | 12.7 |
| Example P2 | 9.6 |
| Example P4 | 9.5 |
| Example P1 | 8.0 |

Color Fade of a Printed Article (100% Print Density. Cyan)

| Coating Polymer | DE after 96 hours |
| --- | --- |
| PVP | 28.9 |
| Gelatin | 17.7 |
| Example P1 | 12.0 |

A variety of different coating polymers are evaluated following the coating and weathering conditions of the

present Example. The changes in optical density (% Delta OD) values represent the change in color density after the indicated time of exposure. A low Delta OD value indicates less change in color density and is highly desirable.

Change in Optical Density of a Printed Article (50% Print Density. Yellow)

| Coating Polymer | % Delta OD after 96 hours |
|---|---|
| PVP | 39.6 |
| Gelatin | 18.1 |
| Example P2 | 9.7 |
| Example P4 | 8.6 |
| Example P1 | 5.5 |

Change in Optical Density of a Printed Article (100% Print Density, Yellow)

| Coating Polymer | % Delta OD after 96 hours |
|---|---|
| PVP | 23.6 |
| Gelatin | 13.9 |
| Example P4 | 4.9 |

Change in Optical Density of a Printed Article (50% Print Density, Magenta)

| Coating Polymer | % Delta OD after 96 hours |
|---|---|
| PVP | 66.8 |
| Example P2 | 25.8 |
| Gelatin | 22.3 |
| PVOH | 15.3 |
| Example P4 | 13.8 |
| Example P1 | 11.1 |

Change in Optical Density of a Printed Article (100% Print Density, Magenta)

| Coating Polymer | % Delta OD after 96 hours |
|---|---|
| PVP | 49.0 |
| Gelatin | 19.3 |
| Example P3 | 16.6 |
| PVOH | 13.3 |
| Example P1 | 10.9 |
| Example P4 | 10.4 |

Change in Optical Density of a Printed Article (50% Print Density, Cyan)

| Coating Polymer | % Delta OD after 96 hours |
|---|---|
| PVP | 46.6 |

(continued)

| Coating Polymer | % Delta OD after 96 hours |
|---|---|
| Gelatin | 33.0 |
| Example P2 | 27.1 |
| PVOH | 24.0 |
| Example P1 | 20.7 |

Change in Optical Density of a Printed Article (100% Print Density, Cyan)

| Coating Polymer | % Delta OD after 96 hours |
|---|---|
| PVP | 57.3 |
| Gelatin | 37.0 |
| Example P2 | 26.8 |
| Example P4 | 25.1 |
| Example P1 | 21.9 |

**Example A2**

Porous Coating Formulations

All formulations are completely aqueous with a pigment to binder ratio of 7:1. A typical coating composition consists of: 50.1 parts pigment (Grace Davison, Sylojet 703C, 19 % solids), 13.6 parts binder (all binder polymers are 10 wt% aqueous solutions), and, optionally, 0.08 parts, 0.16 parts, or 0.32 parts stabilizer. The ingredients are combined and blended in a lab mixer for twenty minutes.

Coating formulations are cast onto a polyethylene coated paper sheet using Meyer bar and convection oven dried so that a 15 grams/$m^2$ coating weight resulted.

**Printing and Weathering Conditions**

Coatings are printed on using HP Desk Jet 970Cxi with yellow, magenta and cyan color blocks. Initial CIELAB color space and reflectance optical density measurements are taken using X-Rite 938 Spectrodensitometer. Samples are aged at a 3-foot distance from an indoor fluorescent light source under a constant air flow of 100 cfm. CIELAB and optical density measurements repeated after 2 months exposure. Relative humidity and temperature are ambient lab conditions and are not monitored or altered.

Different coating polymers are evaluated following the coating and weathering conditions of the present Example. The Delta E (DE) values represent the change in color after the indicated time of exposure. A low DE value indicates less change in color and is highly desirable.

Color Fade of a Printed Article (100% Print Density, Yellow)

| Coating Polymer | DE after 2 months |
|---|---|
| PVOH | 19.35 |
| PVOH/Compound A (0.16 parts) | 17.73 |
| Example P4 | 11.80 |

Compound A is N -(1-oxyl-2,2,6,6-tetramethyl-piperidin-4-yl)-acetamide

Color Fade of a Printed Article (100% Print Density, Magenta)

| Coating Polymer | DE after 2 months |
|---|---|
| PVOH | 55.59 |
| PVOH/Compound B (0.32 parts) | 44.72 |
| Example P4/Compound B(0.32 parts) | 39.47 |

Compound B is 2,2,6,6-tetramethyl-piperidine-1,4-diol

Different coating polymers are evaluated following the coating and weathering conditions of the present Example. The changes in optical density (% Delta OD) values represent the change in color density after the indicated time of exposure. A low Delta OD value indicates less change in color density and is highly desirable.

Change in Optical Density of a Printed Article (100% Print Density, Yellow)

| Coating Polymer | % Delta OD after 2 months |
|---|---|
| PVOH | 22.59 |
| PVOH/Compound A(0.16 parts) | 17.85 |
| Example P4 | 13.55 |
| Example P4/Compound A(0.16 parts) | 12.11 |

Compound A is N -(1-oxyl-2,2,6,6-tetramethyl-piperidin-4-yl)-acetamide

## Claims

1. An ink jet recording media system that comprises a support and one or more coating layers thereon, wherein at least one coating layer comprises a copolymer of the formula

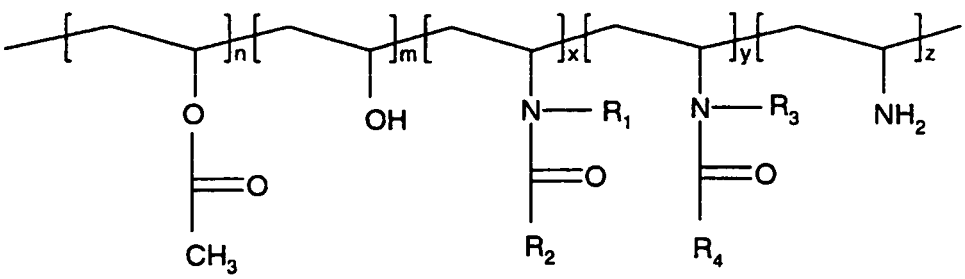

wherein

n is between 0 and about 20 mole percent,
m is between about 50 and about 97 mole percent,
x is between 0 and about 20 mole percent,
y is between 0 and about 20 mole percent,
z is between 0 and about 2 mole percent and
x+y is between about 3 and about 20 mole percent,
$R_1$ and $R_3$ are independently H; 3-propionic acid or $C_1$-$C_6$ alkyl ester thereof; or is 2-methyl- 3-propionic acid or $C_1$-$C_6$ alkyl ester thereof, and
$R_2$ and $R_4$ are independently H or $C_1$-$C_6$ alkyl.

2. A recording media system according to claim **1** in which the weight average molecular weight $M_w$ of the copolymer is between about 10,000 and about 300,000.

3. A recording media system according to claim **1** in which the copolymer has a weight average molecular weight Mw

between about 30,000 and about 130,000, and wherein
n is between 0 and about 5 mole percent,
m is between about 75 and about 90 mole percent,
x is between 0 and about 20 mole percent,
y is between 0 and about 20 mole percent,
z is between 0 and about 2 mole% percent and
x+y is between about 3 and about 20 mole percent.

**4.** A recording media system according to claim **1** which comprises a coating directly on a support, wherein the coating comprises the copolymer.

**5.** A recording media system according to claim **1** which comprises a support and at least one ink jet ink receptive layer, wherein one or more than one of said receptive layers comprises the copolymer.

**6.** A recording media system according to claim **5**, in which one or more than one of said receptive layers further comprises at least one polymer selected from the group consisting of gelatin, starch, styrene butadiene rubber latex, homopolymers and copolymers of (meth)acrylic acid esters, polyacrylic acid, nitrile butadiene rubber latex, polyethylene glycol, polyacrylamide, polyvinyl alcohol, polyurethane latexes and dispersions, vinyl alcohol/vinyl acetate copolymer, polyalkyl oxazoline, polyphenyl oxazoline, polyethylene-imines, methyl cellulose, hydroxymethyl cellulose, hydroxyethyl cellulose, hydroxypropy methyl cellulose, hydroroxypropyl ethyl cellulose, hydroxyethyl methyl cellulose, carboxymethyl cellulose, poly(N-vinyl heterocycles) such as poly(N-vinyl pyrrolidone), (co)polymers of linear poly(N-vinylamides), (co)polymers of polyvinylamine and cationic polymers.

**7.** A recording media system according to claim **5** which further comprises a barrier layer between the support and the ink receptive layer or layers.

**8.** A recording media system according to claim **1** which comprises a support, at least one ink jet ink receptive layer, and a protective coating layer, wherein said protective coating layer comprises the copolymer.

**9.** A recording media system according to claim **5** which comprises a protective coating layer.

**10.** A recording media system according to claim **5** which comprises a protective coating layer, wherein said protective coating layer comprises the copolymer.

**11.** A recording media system according to claim **7** which comprises a protective coating layer.

**12.** A recording media system according to claim **7** which comprises a protective coating layer, wherein said protective coating layer comprises the copolymer.

**13.** A recording media system according to claim **1** which further comprises ink jet ink.

**14.** A recording media system according to claim **1** which further comprises one or more pigments, fillers or organic particulates selected from the group consisting of amorphous silica, crystalline silica, aluminum trihydrate, kaolin, talcum, chalk, betonite, zeolite, glass beads, calcium carbonate, potassium sodium aluminum silicate, diatomaceous earth, silicates of aluminum, silicates of magnesium, titanium doxide, polyolefins, polystyrene, polyurethane, starch, poly(methyl methacrylate) and polytetrafluoroethylene.

**15.** A recording media system according to claim **1** which further comprises one or more additives selected from the group consisting of surface active agents, antistatic agents, thickeners, suspending agents, pH controlling compounds, light stabilizers, antioxidants, humectants, bacteriostats, crosslinking agents and optical brighteners.

**16.** A recording media system according to claim **15** in which the additives are selected from the group consisting of phenolic antioxidants, hydroxybenzotriazole ultraviolet light absorbers, benzophenone ultraviolet light absorbers, hydroxyphenyltriazine ultraviolet light absorbers and hindered amine light stabilizers.

**17.** A recording media system according to claim **1** in which said support comprises cellulose esters, cellulose acetate, polyesters, polystyrene, polyethylene, poly(vinyl acetate), polypropylene, polycarbonate, polymethacrylic acid and methyl and ethyl esters, polyamides such as nylons, polyesters such as poly(ethylene terephthalate) (PET), polyimides, polyethers, polyvinyl chloride polytetrafluoroethylene, polyvinylidene fluoride or polysulfonamides.

**18.** A recording media system according to claim **1** in which said support is paper or transparent poly(ethylene) terephthalate.

**19.** A recording media system according to claim **1** in which
n is between 0 and about 20 mole percent,
m is between about 65 and about 97 mole percent,
x is between about 3 and about 20 mole percent,
y is 0,
z is between 0 and about 2 mole percent and
x+z is between about 3 and about 20 mole percent.

**20.** A recording media system according to claim **1** in which
n is between 0 and about 5 mole percent,
m is between about 75 and about 97 mole percent,
x is between 3 and about 20 mole percent,
y is 0,
z is between about 0 and about 2 mole percent,
x+z is between about 3 and about 20 mole percent and
$R_1$ and $R_2$ are H.

**21.** An ink jet ink which comprises a copolymer according to claim **1**.

**22.** A method for preparing an ink jet recording media system, which method comprises applying one or more coating layers on a support, wherein at least one of the coating layers comprises a copolymer according to claim **1**.

**Patentansprüche**

**1.** Tintenstrahl-Aufzeichnungsmedien-System, das einen Träger und eine oder mehrere Beschichtungs-Schichten darauf umfasst, wobei mindestens eine Beschichtungs-Schicht ein Copolymer der Formel

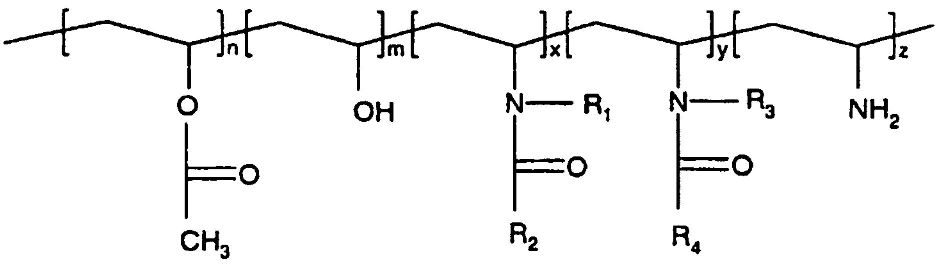

umfasst,
worin

n zwischen 0 und etwa 20 Molprozent liegt,
m zwischen etwa 50 und etwa 97 Molprozent liegt,
x zwischen 0 und etwa 20 Molprozent liegt,
y zwischen 0 und etwa 20 Molprozent liegt,
z zwischen 0 und etwa 2 Molprozent liegt und
x + y zwischen etwa 3 und etwa 20 Molprozent liegt,
$R_1$ und $R_3$ unabhängig H; 3-Propionsäure oder $C_1$-$C_6$- Alkylester davon darstellen, oder 2-Methyl-3-pro- pionsäure oder $C_1$-$C_6$-Alkylester davon darstellen, und
$R_2$ und $R_4$ unabhängig H oder $C_1$-$C_6$-Alkyl darstellen.

**2.** Aufzeichnungsmedien-System nach Anspruch 1, worin das gewichtsmittlere Molekulargewicht $M_w$ von dem Copolymer zwischen etwa 10 000 und etwa 300 000 liegt.

3. Aufzeichnungsmedien-System nach Anspruch 1, worin das Copolymer ein gewichtsmittleres Molekulargewicht $M_w$ zwischen etwa 30 000 und etwa 130 000 aufweist und worin

   n zwischen 0 und etwa 5 Molprozent liegt,
   m zwischen etwa 75 und etwa 90 Molprozent liegt,
   x zwischen 0 und etwa 20 Molprozent liegt,
   y zwischen 0 und etwa 20 Molprozent liegt,
   z zwischen 0 und etwa 2 Molprozent liegt und
   x + y zwischen etwa 3 und etwa 20 Molprozent liegt.

4. Aufzeichnungsmedien-System nach Anspruch 1, das direkt auf einem Träger eine Beschichtung umfasst, wobei die Beschichtung das Copolymer umfasst.

5. Aufzeichnungsmedien-System nach Anspruch 1, das einen Träger und mindestens eine die Tintenstrahltinte aufnehmende Schicht umfasst, worin eine oder mehr als eine der aufnehmenden Schichten das Copolymer umfasst.

6. Aufzeichnungsmedien-System nach Anspruch 5, worin eine oder mehr als eine der aufnehmenden Schichten weiterhin mindestens ein Polymer, ausgewählt aus der Gruppe, bestehend aus Gelatine, Stärke, Styrol-Butadien-Kautschuk-Latex, Homopolymeren und Copolymeren von (Meth)acryl-säure-estern, Polyacryl-säure, Nitril-Butadien-Kautschuk-Latex, Polyethylen-glycol, Polyacrylamid, Polyvinyl-alkohol, Polyurethan-latizes und Dispersionen, Vinyl-alkohol / Vinyl-acetat-Copolymer, Polyalkyl-oxazolin, Polyphenyl-oxazolin, Polyethyleniminen, Methyl-cellulose, Hydroxymethyl-cellulose, Hydroxyethyl-cellulose, Hydroxypropyl-methyl-cellulose, Hydroxypropyl-ethyl-cellulose, Hydroxyethyl-methyl-cellulose, Carboxymethyl-cellulose, Poly-(N-vinyl-heterocyclen), wie Poly-(N-vinyl-pyrrolidon), (Co)polymeren von linearen Poly-(N-vinylamiden), (Co)polymeren von Polyvinylamin und kationischen Polymeren, umfasst / umfassen.

7. Aufzeichnungsmedien-System nach Anspruch 5, das weiterhin eine Sperrschicht zwischen dem Träger und der / den Tinten-aufnehmenden Schicht oder Schichten umfasst.

8. Aufzeichnungsmedien-System nach Anspruch 1, das einen Träger, mindestens eine die Tintenstrahltinte aufnehmende Schicht und eine Schutz-Beschichtungs-Schicht umfasst, wobei die Schutz-Beschichtungs-Schicht das Copolymer umfasst.

9. Aufzeichnungsmedien-System nach Anspruch 5, das eine Schutz-Beschichtungs-Schicht umfasst.

10. Aufzeichnungsmedien-System nach Anspruch 5, das eine Schutz-Beschichtungs-Schicht umfasst, worin die Schutz-Beschichtungs-Schicht das Copolymer umfasst.

11. Aufzeichnungsmedien-System nach Anspruch 7, das eine Schutz-Beschichtungs-Schicht umfasst.

12. Aufzeichnungsmedien-System nach Anspruch 7, das eine Schutz-Beschichtungs-Schicht umfasst, worin die Schutz-Beschichtungs-Schicht das Copolymer umfasst.

13. Aufzeichnungsmedien-System nach Anspruch 1, das weiterhin Tintenstrahltinte umfasst.

14. Aufzeichnungsmedien-System nach Anspruch 1, das weiterhin ein oder mehrere Pigmente, Füllstoffe oder organische teilchenförmige Stoffe umfasst, ausgewählt aus der Gruppe, bestehend aus amorphem Siliziumdioxid, kristallinem Siliziumdioxid, Aluminium-trihydrat, Kaolin, Talkum, Kreide, Bentonit, Zeolith, Glaskugeln, Calciumcarbonat, Kalium-Natrium-AluminiumSilikat, Diatomeenerde, Silikaten von Aluminium, Silikaten von Magnesium, Titandioxid, Polyolefinen, Polystyrol, Polyurethan, Stärke, Poly-(methyl-methacrylat) und Polytetrafluorethylen.

15. Aufzeichnungsmedien-System nach Anspruch 1, das weiterhin ein oder mehrere Additive, ausgewählt aus der Gruppe, bestehend aus oberflächenaktiven Mitteln, antistatischen Mitteln, Verdickungsmitteln, suspendierenden Mitteln, pH-steuernden Verbindungen, Lichtstabilisatoren, Antioxidantien, feucht haltenden Mitteln, Bakteriostatika, Vernetzungsmitteln und optischen Aufhellern, umfasst.

**16.** Aufzeichnungsmedien-System nach Anspruch 15, worin die Additive ausgewählt sind aus der Gruppe, bestehend aus phenolischen Antioxidantien, Hydroxybenzotriazol-Ultraviolettlicht-Absorptionsmitteln, Benzophenon-Ultraviolettlicht-Absorptionsmitteln, Hydroxyphenyltriazin-Ultraviolettlicht-Absorptionsmitteln und gehinderten Amin-Lichtstabilisatoren.

**17.** Aufzeichnungsmedien-System nach Anspruch 1, worin der Träger Cellulose-ester, Cellulose-acetat, Polyester, Polystyrol, Polyethylen, Poly-(vinyl-acetat), Polypropylen, Polycarbonat, Polymethacryl-säure und Methyl- und Ethylester, Polyamide, wie Nylons, Polyester, wie Poly-(ethylen-terephthalat) (PET), Polyimide, Polyether, Polyvinylchlorid, Polytetrafluorethylen, Polyvinyliden-fluorid oder Polysulfonamide umfasst.

**18.** Aufzeichnungsmedien-System nach Anspruch 1, worin der Träger Papier oder transparentes Poly-(ethylen)-terephthalat ist.

**19.** Aufzeichnungsmedien-System nach Anspruch 1, worin

n zwischen 0 und etwa 20 Molprozent liegt,
m zwischen etwa 65 und etwa 97 Molprozent liegt,
x zwischen etwa 3 und etwa 20 Molprozent liegt,
y 0 ist,
z zwischen 0 und etwa 2 Molprozent liegt und
x + z zwischen etwa 3 und etwa 20 Molprozent liegt.

**20.** Aufzeichnungsmedien-System nach Anspruch 1, worin

n zwischen 0 und etwa 5 Molprozent liegt,
m zwischen etwa 75 und etwa 97 Molprozent liegt,
x zwischen etwa 3 und etwa 20 Molprozent liegt,
y 0 ist,
z zwischen etwa 0 und etwa 2 Molprozent liegt
x + z zwischen etwa 3 und etwa 20 Molprozent liegt und
$R_1$ und $R_2$ H darstellen.

**21.** Tintenstrahl-Tinte, die ein Copolymer nach Anspruch 1 umfasst.

**22.** Verfahren zur Herstellung eines Tintenstrahl-Aufzeichnungsmedien-Systems, wobei das Verfahren das Auftragen von einer oder mehreren Beschichtungs-Schichten auf einen Träger umfasst, wobei mindestens eine der Beschichtungs-Schichten ein Copolymer nach Anspruch 1 umfasst.

## Revendications

**1.** Système de support d'enregistrement à jet d'encre comprenant un support et une ou plusieurs couches de revêtement sur celui-ci, dans lequel au moins une couche de revêtement comprend un copolymère de formule

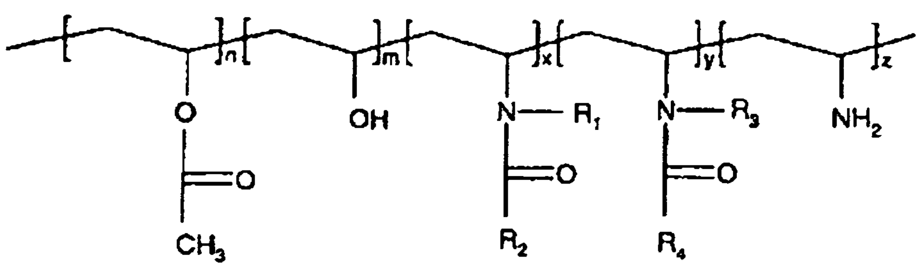

où

n est compris entre 0 et environ 20 pour cent en mole,
m est compris entre environ 50 et environ 97 pour cent en mole,
x est compris entre 0 et environ 20 pour cent en mole,
y est compris entre 0 et environ 20 pour cent en mole,
z est compris entre 0 et environ 2 pour cent en mole et
x + y est compris entre environ 3 et environ 20 pour cent en mole,
$R_1$ et $R_3$ sont indépendamment H ; l'acide 3-propionique ou un ester d'alkyle en $C_1$ à $C_6$ de celui-ci ; ou l'acide 2-méthyl-3-propionique ou un ester d'alkyle en $C_1$ à $C_6$ de celui-ci, et
$R_2$ et $R_4$ sont indépendamment H ou un groupe alkyle en $C_1$ à $C_6$.

**2.** Système de support d'enregistrement selon la revendication 1, dans lequel le poids moléculaire moyen en poids $M_w$ du copolymère est compris entre environ 10 000 et environ 300 000.

**3.** Système de support d'enregistrement selon la revendication 1, dans lequel le copolymère a un poids moléculaire moyen en poids Mw compris entre environ 30 000 et environ 130 000, et dans lequel
n est compris entre 0 et environ 5 pour cent en mole,
m est compris entre environ 75 et environ 90 pour cent en mole,
x est compris entre 0 et environ 20 pour cent en mole,
y est compris entre 0 et environ 20 pour cent en mole,
z est compris entre 0 et environ 2 pour cent en mole et
x + y est compris entre environ 3 et environ 20 pour cent en mole,

**4.** Système de support d'enregistrement selon la revendication 1 qui comprend un revêtement directement sur un support, dans lequel le revêtement comprend le copolymère.

**5.** Système de support d'enregistrement selon la revendication 1, qui comprend un support et au moins une couche réceptrice d'encre à jet d'encre, dans lequel une ou plusieurs desdites couches réceptrices comprend le copolymère.

**6.** Système de support d'enregistrement selon la revendication 5, dans lequel une ou plusieurs desdites couches réceptrices comprend en outre au moins un polymère choisi dans le groupe constitué par la gélatine, l'amidon, le latex de caoutchouc-styrène-butadiène, des homopolymères et copolymères d'esters d'acide (méth)acrylique, le poly(acide acrylique), le latex de caoutchouc nitrile butadiène, le poly(éthylène glycol), le poly(acrylamide), le poly (alcool vinylique), les latex et dispersions de poly(uréthane), un copolymère d'alcool vinylique/acétate de vinyle, la poly(alkyl oxazoline), la poly(phényl oxazoline), les poly(éthylène-imines), la méthyl cellulose, l'hydroxyméthyl cellulose, l'hydroxyéthyl cellulose, l'hydroxypropyl méthyl cellulose, l'hydroxypropyl éthyl cellulose, l'hydroxyéthyl méthyl cellulose, la carboxyméthyl cellulose, les poly(N-vinyl hétérocycles), tels que la poly(N-vinyl pyrrolidone), les (co)polymères de poly(N-vinylamides) linéaires, les (co)polymères de poly(vinylamine) et les polymères cationiques.

**7.** Système de support d'enregistrement selon la revendication 5, comprenant en outre une couche barrière entre le support et la couche ou les couches réceptrices d'encre.

**8.** Système de support d'enregistrement selon la revendication 1, comprenant un support, au moins une couche réceptrice d'encre à jet d'encre et une couche de revêtement protecteur, dans lequel ladite couche revêtement protecteur comprend le copolymère.

**9.** Système de support d'enregistrement selon la revendication 5, comprenant une couche de revêtement protecteur.

**10.** Système de support d'enregistrement selon la revendication 5, comprenant une couche de revêtement protecteur, dans lequel ladite couche de revêtement protecteur comprend le copolymère.

**11.** Système de support d'enregistrement selon la revendication 7, comprenant une couche de revêtement protecteur.

**12.** Système de support d'enregistrement selon la revendication 7, comprenant une couche de revêtement protecteur, dans lequel ladite couche de revêtement protecteur comprend le copolymère.

**13.** Système de support d'enregistrement selon la revendication 1, comprenant en outre une encre à jet d'encre.

**14.** Système de support d'enregistrement selon la revendication 1, comprenant en outre un ou plusieurs pigments,

charges, ou particules organiques choisis dans le groupe constitué par la silice amorphe, la silice cristalline, le trihydrate d'aluminium, le kaolin, le talc, la craie, la bétonite, la zéolite, des billes de verre, le carbonate de calcium, le silicate de potassium-sodium-aluminium, la terre de Diatomées, les silicates d'aluminium, les silicates de magnésium, le dioxyde de titane, les poly(oléfines), le poly(styrène), le poly(uréthane), l'amidon, le poly(méthacrylate de méthyle) et le poly(tétrafluoroéthylène).

**15.** Système de support d'enregistrement selon la revendication 1, comprenant en outre un ou plusieurs additifs choisis dans le groupe constitués par les agents tensioactifs, les agents antistatiques, les épaississants, les colloïdes protecteurs, les composés régulant le pH, les stabilisants à la lumière, les antioxydants, les humidifiants, les bactériostatiques, les agents de réticulation et les azurants optiques.

**16.** Système de support d'enregistrement selon la revendication 15, dans lequel les additifs sont choisis dans le groupe constitué par les antioxydants phénoliques, les absorbeurs de lumière ultraviolette à base d'hydroxybenzotriazole, les absorbeurs de lumière ultraviolette à base de benzophénone, les absorbeurs de lumière ultraviolette à base d'hydroxyphényltriazine et les stabilisants à la lumière à base d'amine encombrée.

**17.** Système de support d'enregistrement selon la revendication 1, dans lequel ledit support comprend des esters de cellulose, de l'acétate de cellulose, des poly(esters), du poly(styrène), du poly(éthylène), du poly(acétate de vinyle), du poly(propylène), du poly(carbonate), du poly(acide méthacrylique) et des esters de méthyle et d'éthyle, des poly (amides) tels que les nylons, des poly(esters) tels que le poly(téréphtalate d'éthylène) (PET), des poly(imides), des poly(éthers), du poly(chlorure de vinyle), du poly(tétrafluoroéthylène), du poly(fluorure de vinylidène) ou des poly (sulfonamides).

**18.** Système de support d'enregistrement selon la revendication 1, dans lequel ledit support est un papier ou un poly (téréphtalate d'éthylène) transparent.

**19.** Système de support d'enregistrement selon la revendication 1, dans lequel
n est compris entre 0 et environ 20 pour cent en mole,
m est compris entre environ 65 et environ 97 pour cent en mole,
x est compris entre environ 3 et environ 20 pour cent en mole,
y vaut 0,
z est compris entre 0 et environ 2 pour cent en mole et
x + z est compris entre environ 3 et environ 20 pour cent en mole.

**20.** Système de support d'enregistrement selon la revendication 1, dans lequel
n est compris entre 0 et environ 5 pour cent en mole,
m est compris entre environ 75 et environ 97 pour cent en mole,
x est compris entre 3 et environ 20 pour cent en mole,
y vaut 0,
z est compris entre environ 0 et environ 2 pour cent en mole et
x + z est compris entre environ 3 et environ 20 pour cent en mole, et
$R_1$ et $R_2$ sont H.

**21.** Encre à jet d'encre comprenant un copolymère selon la revendication 1.

**22.** Procédé de préparation d'un système de support d'enregistrement à jet d'encre, le procédé comprenant l'application d'une ou plusieurs couches de revêtement sur un support, dans lequel au moins une des couches de revêtement comprend un copolymère selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4617239 A
- US 5662997 A
- US 5710211 A
- US 4503111 A
- US 4575465 A
- US 4935307 A
- US 5206071 A
- US 6127037 A
- WO 0037259 A
- US 4880497 A
- US 4978427 A
- US 5194492 A
- US 5300566 A
- EP 0869010 A
- US 6060566 A
- US 5798173 A
- JP 01024784 A
- JP 07084091 B
- JP 09302595 B
- JP 11129609 B
- US 6096826 A
- US 5463110 A
- US 5672731 A
- JP 2002220558 B
- US 5474843 A
- US 5782963 A
- US 5855655 A
- US 6254724 B


### Non-patent literature cited in the description


- Using Polyvinyl Alcohol In Ink-Jet Printing Paper. *TAPPI Journal,* January 1997, 68-70